(19) Europäisches Patentamt / European Patent Office / Office européen des brevets

(11) **EP 2 993 383 B1**

(12) **EUROPÄISCHE PATENTSCHRIFT**

(45) Veröffentlichungstag und Bekanntmachung des Hinweises auf die Patenterteilung:
**07.11.2018 Patentblatt 2018/45**

(21) Anmeldenummer: **14183390.5**

(22) Anmeldetag: **03.09.2014**

(51) Int Cl.:
*F16P 1/06* (2006.01)   *B23Q 11/08* (2006.01)
*E06B 9/00* (2006.01)   *F16P 3/02* (2006.01)

(54) **Laserbearbeitungsmaschinen-Anordnung mit als Lamellenbereich ausgeführtem Teil einer Laserschutzwand**

Laser processing machine assembly with part of a laser safety wall designed as a lamella area

Système de machines d'usinage au laser doté d'une partie lamellaire d'une paroi de protection laser

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(43) Veröffentlichungstag der Anmeldung:
**09.03.2016 Patentblatt 2016/10**

(73) Patentinhaber: **TRUMPF Werkzeugmaschinen GmbH + Co. KG**
**71254 Ditzingen (DE)**

(72) Erfinder:
• **Bunz, Andreas**
  **70771 Leinfelden-Echterdingen (DE)**
• **Reiter, Tobias**
  **71229 Leonberg (DE)**
• **Grüninger, Albert**
  **71229 Leonberg (DE)**
• **Heisenberg, Dr. David**
  **71229 Leonberg (DE)**

(74) Vertreter: **Kohler Schmid Möbus Patentanwälte Partnerschaftsgesellschaft mbB**
**Gropiusplatz 10**
**70563 Stuttgart (DE)**

(56) Entgegenhaltungen:
DE-U1-202007 007 616   DE-U1-202009 013 899
US-A- 5 760 558   US-A1- 2009 045 175

EP 2 993 383 B1

**Beschreibung**

Die Erfindung betrifft eine Laserbearbeitungsmaschinen-Anordnung, umfassend

- einen Laserbearbeitungskopf zur Laserbearbeitung eines Werkstücks, wobei im Betrieb des Laserbearbeitungskopfs von einer Bearbeitungszone am Werkstück radial Laserstrahlung ausgeht, und
- eine Laserschutzwand, welche den Laserbearbeitungskopf und einen Gefahrenbereich um den Laserbearbeitungskopf umgibt, und welche die im Betrieb radial von der Bearbeitungszone ausgehende Laserstrahlung abschirmt,

wobei zumindest ein Teil der Laserschutzwand als ein Lamellenbereich mit mehreren, für die Laserstrahlung undurchlässigen Lamellenelementen ausgebildet ist,
wobei die Lamellenelemente entlang einer ersten Richtung (Querrichtung), die senkrecht zur lokalen Ausbreitungsrichtung der Laserstrahlung verläuft, überlappen,
und wobei die Lamellenelemente entlang einer zweiten Richtung (Versatzrichtung) zueinander versetzt angeordnet sind,
so dass entlang einer dritten Richtung (Blickrichtung), die senkrecht zur zweiten Richtung verläuft, zwischen den Lamellenelementen freie Sichtspalte verbleiben.

Eine solche Laserbearbeitungsmaschinen-Anordnung ist aus der US 2009/0045175 A1 bekannt geworden.

Durch Laserbearbeitungsverfahren, insbesondere Laserschneiden und Laserschweißen, können Werkstücke, insbesondere Bleche, hoch präzise bearbeitet werden. Allerdings müssen bei der Laserbearbeitung Personen in der Umgebung vor der Laserstrahlung geschützt werden.

Laserstrahlung kann insbesondere die Augen von Personen schädigen. Dabei ist nicht nur eine unmittelbare Bestrahlung mit dem Laserstrahl gefährlich; auch Streulicht, das von einer Bearbeitungszone (dem belichtetem Bereich) am Werkstück ausgeht, kann zu dauerhaften Schädigungen im Bereich von Netzhaut oder Pupille führen. Eine besondere Gefahr geht dabei von Lasern im nicht sichtbaren Strahlungsbereich, insbesondere Infrarot-Lasern aus, da der Lichteinfall ins Auge nicht sofort bemerkt wird und insbesondere den Lidschlussreflex nicht auslöst.

Zum Schutz von Bedienpersonal ist es bekannt, lokal am Laserbearbeitungskopf einer Laserbearbeitungsmaschine eine Abschirmung, auch interne Abschirmung genannt, anzuordnen. Aus der WO 2011/045098 A1 ist beispielsweise eine lokale Abschirmungsvorrichtung an einem Laserbearbeitungskopf mit zwei gegeneinander bewegbaren, bürstenartigen Abschirmungseinheiten bekannt geworden.

Ebenso ist es bekannt geworden, externe Abschirmungen zum Schutz des Bedienpersonals einzusetzen. Eine externe Abschirmung umfasst eine Laserschutzwand aus für die verwendete Laserstrahlung undurchlässigem Material (meist Metallblech), die den Laserbearbeitungskopf und zumindest einen Teil der Laserbearbeitungsmaschine umgibt. Der innerhalb der Laserschutzwand liegende Raum wird auch als Gefahrenbereich bezeichnet, weil er grundsätzlich von gestreuter Laserstrahlung durchstrahlt werden kann.

Im Firmenprospekt "TruMatic 3000 fiber: Kombination hoch drei." der Trumpf Werkzeugmaschinen GmbH + Co. KG, Ditzingen, DE, heruntergeladen im Internet am 17.12.2013, ist die dortige Laserbearbeitungs- und Stanzmaschine rundum mit einer Laserschutzwand umgeben, die für ein Betreten des Gefahrenbereichs durch Personen beispielsweise an Teleskoptüren geöffnet werden muss. Die Laserschutzwand ist dabei nur in Höhenbereichen angeordnet, in denen tatsächlich Laserstrahlung auftritt.

Eine ähnliche Laserbearbeitungsmaschine ist aus der nachveröffentlichten europäischen Patentanmeldung 13 198 967.5 bekannt geworden, bei der in der Laserschutzwand weiterhin durch Teile der Laserschutzwand abgeschattete Zugangsöffnungen vorgesehen sind.

Die typischerweise für Laserschutzwände verwendeten Materialien (wie Metallbleche) sind nicht nur für die verwendete Laserstrahlung, sondern auch für sichtbares Licht undurchlässig. Die Laserschutzwand behindert daher die Sicht eines Bedieners auf das Innere der Laserbearbeitungsmaschinen-Anordnung oder auch durch diese hindurch. Insbesondere bei der Inbetriebnahme wird dann eine visuelle Kontrolle des Gefahrenbereichs (also die Verifikation, dass sich keine Personen im Gefahrenbereich aufhalten) erschwert. Ebenso kann die Sicht eines Bedieners auf eine Automatisierungsstation der Laserbearbeitungsmaschinen-Anordnung behindert sein. Dies ist nachteilig, wenn die Belegung einer Werkstückhandhabungseinrichtung visuell überprüft werden soll, oder auch wenn ein Vorrat an unbearbeiteten oder bearbeiteten Werkstücken überprüft werden soll. Zudem sollten sich im Verfahrbereich der Werkstückhandhabungseinrichtung oder der Werkstücke der Automatisierungsstation (der über den Gefahrenbereich des Laserbearbeitungskopf hinaus gehen kann) auch keine Personen aufhalten, wenn die Automatisierungsstation in Betrieb genommen wird; auch dies sollte von einem Bediener visuell überprüfbar sein. Eine die Sicht eines Bedieners blockierende Laserschutzwand kann daher die Sicherheit und den Bedienkomfort erheblich einschränken.

Aus der Firmendruckschrift "Trumatic 3000 fiber: Kombination hoch drei." ist es bekannt, Sichtfenster in die Laserschutzwand zu integrieren; die in die Sichtfenster eingesetzten Scheiben sind aus einem für die Laserstrahlung undurchlässigen, speziellen Filtermaterial gefertigt. Ein Sichtfenster erlaubt eine visuelle Kontrolle des Inneren der Laserbearbeitungsmaschinen-Anordnung durch einen Bediener. Allerdings verteuert der Einbau von Sichtfenstern, insbesondere das spezielle Filtermaterial für die Scheiben, die Laserschutzwand erheblich. Zudem verfälscht das spezielle Filtermaterial der Scheiben den Farbeindruck und verdunkelt auch allgemein das sichtbare Licht, ähnlich wie die Sicht durch eine Sonnenbrille. Dies macht teilweise eine zusätzliche Beleuchtung im Maschineninnenraum notwendig.

Die US 2009/0045175 A1 beschreibt eine thermische Schneidmaschine, etwa eine Plasma- oder Laserschneidmaschine, wobei eine Abdeckung umfassend mehrere Schildplatten vorgesehen ist, die zumindest einen Teil der Umgebung eines Brenners abdeckt. Zwischen benachbarten Schildplatten bleibt jeweils ein Spalt. Die Schildplatten sind so angeordnet, dass alle vom axialen Zentrum des Brenners ausgehenden radiale Linien auf wenigstens eine der Schildplatten treffen. In einer Ausführungsform sind die Schildplatten auf einem Kreisbogen hintereinander angeordnet.

## Aufgabe der Erfindung

Der Erfindung liegt die Aufgabe zugrunde, auf kostengünstige Weise einem Bediener eine verbesserte Sicht in das Innere der Laserbearbeitungsmaschinen-Anordnung oder auch durch diese hindurch zu ermöglichen, insbesondere so dass die Bediensicherheit und der Bedienkomfort erhöht werden.

## Kurze Beschreibung der Erfindung

Diese Aufgabe wird gelöst durch eine Anordnung der eingangs genannten Art, die dadurch gekennzeichnet ist, dass die Anordnung über eine Automatisierungseinrichtung verfügt, an der unbearbeitete Werkstücke in die Anordnung eingeschleust werden können, insbesondere von dort zum Laserbearbeitungskopf verbracht werden können, und/oder bearbeitete Werkstücke aus der Anordnung ausgeschleust werden können, insbesondere vom Laserbearbeitungskopf nach dort verbracht werden können,

dass die Anordnung weiterhin über einen Bedienerstand verfügt, von dem aus ein Bediener die Anordnung, insbesondere die Automatisierungseinrichtung, steuern kann,

und dass der Lamellenbereich so angeordnet ist, dass ein Bediener am Bedienerstand entlang der dritten Richtung durch den Lamellenbereich die Automatisierungseinrichtung einsehen kann.

Dadurch kann der Bediener eine visuelle Kontrolle der Automatisierungseinrichtung (Automatisierungsstation) oder zumindest einzelner Teilbereiche der Automatisierungseinrichtung vornehmen. Insbesondere kann der Bediener prüfen, ob ein lokaler Vorrat an unbearbeiteten Werkstücken ausreichend ist, ob eine lokale Ablage für bearbeitete Werkstücke noch ausreichend aufnahmefähig ist, ob eine Transportvorrichtung für Werkstücke der Automatisierungseinrichtung (etwa ein Portal) korrekt funktioniert, insbesondere belegt oder unbelegt ist, und/oder ob sich Personen in einem Verfahrbereich für Werkstücke oder der Transportvorrichtung an der Automatisierungseinrichtung aufhalten. Dadurch kann die Bediensicherheit und der Bedienkomfort erhöht werden.

Die Erfindung macht sich zunutze, dass die von der Bearbeitungszone ausgehende Laserstrahlung sich radial, also in gerader Richtung, ausbreitet. Für die Abschattung einer Teilfläche der Laserschutzwand ist es daher nicht notwendig, diese Teilfläche mit einem einzigen, großen Schutzelement abzudecken. Vielmehr genügt es, diese Teilfläche (hier genannt Lamellenbereich) mit mehreren kleinen Schutzelementen (hier genannt Lamellenelemente) in einer winkeligen Anordnung abzudecken, so dass das in gerader Richtung propagierende Laserlicht stets blockiert wird.

Die Lamellenelemente überlappen entlang einer ersten Richtung (Querrichtung), die senkrecht zur (lokalen) Laserausbreitungsrichtung verläuft, um die Fläche des Lamellenbereichs zusammen vollständig zu überdecken. Jedoch sind die überlappenden Lamellenelemente in einer zweiten Richtung (Versatzrichtung) hintereinander und mit einem gegenseitigen Abstand angeordnet, so dass in einer dritten Richtung (Blickrichtung), die wiederum senkrecht zur zweiten Richtung liegt, zwischen benachbarten Lamellenelementen in freier Sichtlinie hindurch gesehen werden kann.

Dadurch ist es möglich, im Lamellenbereich praktisch durch die Laserschutzwand hindurch zu sehen, sofern die Augen des Betrachters im Wesentlichen in die dritte Richtung (Blickrichtung) gerichtet sind. Der Blick durch den Lamellenbereich in die Laserbearbeitungsmaschinen-Anordnung oder durch diese hindurch ist dabei auch gefahrlos im Betrieb des Laserbearbeitungskopfes möglich, da der Betrachter lediglich seitlich auf die Laserstrahlung blickt.

Man beachte, dass die Geometrie, Anordnung und Ausrichtung der Lamellenelemente auf den Ort der Quelle der Laserstrahlung, also die Bearbeitungszone abgestimmt sein muss, um die Überlappung der Lamellenelemente über den gesamten Lamellenbereich, also die vollständige Abdeckung des Lamellenbereichs, sicherzustellen.

Im Allgemeinen ist es vorteilhaft, die dem Bearbeitungsbereich zugewandte Lamellenoberfläche ungefähr senkrecht zur lokalen Laserstrahlrichtung auszurichten, insbesondere um mit einer möglichst geringen Anzahl von Lamellenelementen einen möglichst großen Lamellenbereich abzudecken. Im Allgemeinen wird ein Einfallswinkel der Laserstrahlung (also der Winkel zwischen der der Bearbeitungszone zugewandten Lamellenoberfläche und der lokalen Ausbreitungsrichtung der Laserstrahlung) bevorzugt zu wenigstens 45°, besonders bevorzugt zu wenigstens 60°, und ganz besonders bevorzugt zu wenigstens 77,5° eingestellt.

Als Material für die Lamellenelemente kommen alle Materialien in Betracht, die eine ausreichende Absorption im Bereich der Wellenlängen der Laserstrahlung des Bearbeitungskopfes haben (z. B. wenigstens 99% Absorption bei der verwendeten Dicke). Meist ist das verwendete Material im sichtbaren Spektralbereich insgesamt undurchlässig; solche Materialien sind relativ kostengünstig erhältlich. Es ist aber auch möglich, ein Filtermaterial einzusetzen, das eine gewisse Resttransparenz im sichtbaren Spektralbereich aufweist, jedoch die Laserwellenlänge ausreichend abschirmt. Solche Materialien sind meist etwas teurer, ermöglichen aber auch aus anderen Richtungen als der dritten Richtung noch einen gewissen Einblick in den Gefahrenbereich. Die Lamellenelemente können aus starrem Material (wie Metallblech oder Holz) oder auch aus flexiblem Material (etwa Gummi) ausgebildet sein. Ebenso können die Lamellenelemente fest installiert sein, oder alternativ mit einer Beweglichkeit ausgestattet sein, etwa um die Ausrichtung der Lamellen bei einer nicht ortsfesten Bearbeitungszone nachzuführen. Bevorzugt sind die Lamellenelemente als ein Vorhang ausgebildet.

Bevorzugte Ausführungsformen der Erfindung

Bei einer besonders vorteilhaften Ausführungsform der erfindungsgemäßen Anordnung ist vorgesehen, dass die zweite Richtung um maximal 45°, bevorzugt um maximal 30°, von der lokalen Ausbreitungsrichtung der Laserstrahlung abweicht. In der zweiten Richtung sind die Lamellenelemente versetzt zueinander (hintereinander) angeordnet, typischerweise sodass sich ein maximaler gegenseitiger Abstand (d.h. ein maximal breiter Sichtspalt) ergibt. Dadurch, dass die Laserstrahlung im Wesentlichen entlang der zweiten Richtung auf die Lamellenelemente trifft, kann eine vergleichsweise große Fläche mit den überlappenden Lamellenelementen überdeckt werden.

Besonders bevorzugt sind bei einer Ausführungsform die Lamellenelemente jeweils in der Form einer ebenen Platte ausgebildet, wobei eine Plattenebene der ebenen Platte senkrecht zur zweiten Richtung verläuft. Mit plattenförmig ausgebildeten Lamellenelementen und bei Ausrichtung der Plattenebenen senkrecht zur zweiten Richtung kann mit einer geringen Lamellenanzahl eine besonders große Fläche überdeckt werden. Man beachte, dass die ebene Platte aus steifem Material (wie Metallblech) oder auch aus flexiblen Material (etwa Gummi) ausgebildet sein kann. Die Ausbildung als ebene Platte bezieht sich im letzteren Fall auf einen unverformten, beispielsweise hängenden Zustand. Ergänzend wird angemerkt, dass im Rahmen der Erfindung auch nicht ebene bzw. nicht plattenförmige Lamellenelemente eingesetzt werden können, etwa solche mit einer Krümmung bezüglich einer vertikalen Achse.

Besonders bevorzugt ist eine Ausführungsform, bei der die Lamellenelemente aus einem flexiblen Material, insbesondere aus Gummi, gefertigt sind. Dadurch ist es möglich, die Lamellenelemente bei Bedarf zu verformen, etwa um Werkstücke, Arbeitsgeräte oder Personen durch den von dem Lamellenelementen abgedeckten Lamellenbereich zu verbringen. In diesem Fall sollte das Betreten des Gefahrenbereichs am oder vor dem Lamellenbereich zusätzlich überwacht werden (siehe unten). Ein Öffnen einer Tür oder dergleichen ist für einen Zugang zum Inneren der Laserbearbeitungsmaschinen-Anordnung hier nicht nötig. Man beachte, dass die Lamellenelemente bei dieser Ausführungsform bevorzugt selbsttätig in die abdeckende Form bzw. Position zurückkehren, etwa aufgrund ihrer elastischen Eigenschaften oder auch aufgrund von Schwerkraftwirkung.

Bevorzugt ist auch eine Ausführungsform, bei der die Lamellenelemente in einer gerade verlaufenden Reihe angeordnet sind. Mit diesem Aufbau kann auf einfache Weise eine über den Lamellenbereich konstante dritte Richtung (Blickrichtung) in das Innere der Anordnung freigegeben werden.

Vorteilhafter ist eine Ausführungsform, bei der die Lamellenelemente parallel zur Vertikalen ausgerichtet sind. In diesem Fall eröffnen die Lamellenelemente Sichtspalte, die in vertikaler Richtung ausgedehnt sind, was unabhängig von der Körpergröße des Betrachters einen guten Blick ins Innere der Anordnung eröffnet. Zudem kann mit vertikal ausgerichteten Lamellenelementen besonders gut Laserstrahlung abgedeckt werden, die sich vor allem im Bereich um eine horizontale Ebene herum von der Bearbeitungszone aus ausbreitet, was bei horizontal liegenden Metallblechen als Werkstücken und darüber oder darunter angeordnetem Laserbearbeitungskopf eine häufige Anwendungssituation ist.

Bei einer ebenfalls vorteilhaften Ausführungsform sind die Lamellenelemente mit einem oberen Ende an einem Halteelement befestigt und hängen vom Halteelement herab. Dies hat sich in der Praxis bewährt. Die hängende Befestigung ist besonders einfach. Insbesondere flexible Lamellenelemente können in dieser Ausführungsform durch Schwerkraft gut ausgerichtet werden. Bevorzugt ist unterhalb der Lamellenelemente freier Raum, so dass beispielsweise mit einem Gabelstapler durch und unter den Lamellenbereich ins Innere der Anordnung eingefahren werden kann. Unterhalb der Lamellenelemente darf in diesem Fall keine Laserstrahlung auftreten, etwa infolge einer Abschattung durch laserbearbeitungskopfeigene Strukturen oder das Werkstück selbst.

Vorteilhaft ist auch eine Ausführungsform, die vorsieht, dass die Lamellenelemente über oder angelenkt an eine motorische Drehhalterung an einem Trägerelement befestigt sind, wobei mit der motorischen Drehhalterung die Lamellenelemente jeweils um eine Drehachse gedreht werden können, insbesondere wobei die Drehachse näherungsweise senkrecht zur lokalen Ausbreitungsrichtung verläuft, und dass eine Steuereinrichtung vorgesehen ist, mit der ein Drehwinkel der Lamellenelemente in Abhängigkeit von der Position und/oder der Abstrahlcharakteristik der Bearbeitungszone automatisch einstellbar ist. In dieser Ausführungsform können die Lamellenelemente für verschiedene Laserbearbeitungssituationen angepasst werden, wodurch die Laserbearbeitungsmaschinen-Anordnung flexibler genutzt werden kann. Typischerweise sind die Lamellenelemente hier um eine vertikale Achse drehbar. Bevorzugt sind in dieser Ausführungsform die Lamellenelemente an beiden Enden (etwa oben und unten) befestigt bzw. geführt, um ein unerwünschtes Auffächern der Lamellenelemente durch die Drehbewegung zu verhindern, insbesondere wenn ein flexibles Lamellenmaterial verwendet wird.

Besonders bevorzugt ist eine Ausführungsform, bei der für die Dicke D der Lamellenelemente entlang der zweiten Richtung und die Breite BR der Sichtspalte zwischen benachbarten Lamellenelemente entlang der zweiten Richtung gilt: $D \leq 1/2*BR$, bevorzugt $D \leq 1/8*BR$. Durch die große Breite der Sichtspalte wird eine gute Sicht durch den Lamellenbereich in Blickrichtung sichergestellt.

Bei einer bevorzugten Ausführungsform weist der Lamellenbereich wenigstens fünf gleichartige Lamellenelemente auf. Dies ermöglicht einen einfachen und kostengünstigen Aufbau des Lamellenbereichs. Die Lamellenelemente sind typischerweise parallel zueinander ausgerichtet.

Bevorzugt ist auch eine Ausführungsform, die vorsieht, dass entlang der dritten Richtung vor oder hinter dem Lamellenbereich

- wenigstens ein weiterer Lamellenbereich, dessen dritte Richtung parallel zur dritten Richtung des Lamellenbereichs verläuft,
- und/oder wenigstens ein Laserschutzfenster, mit einer Verglasung, die für die Laserstrahlung intransparent ist,
- und/oder wenigstens eine Zugangsöffnung, die mittels der Laserschutzwand oder unter Mitwirkung der Laserschutzwand von der im Betrieb des Laserbearbeitungskopfs von der Bearbeitungszone radial ausgehenden Laserstrahlung vollständig abgeschattet ist,

angeordnet ist. Dadurch werden die Möglichkeiten, ins Innere oder durch die Anordnung zu blicken, erweitert und und flexibilisiert. Der weitere Lamellenbereich ist erfindungsgemäß entsprechend dem Lamellenbereich (wie oben beschrieben) aufgebaut. Abgeschattete Zugangsöffnungen können insbesondere wie in der nachveröffentlichten europäischen Patentanmeldung 13 198 967.5 beschrieben ausgestaltet sein.

Bei einer vorteilhaften Ausführungsform ist vorgesehen, dass die Anordnung ein Überwachungssystem umfasst, welches ein Betreten des Gefahrenbereichs, insbesondere ein Betreten des Gefahrenbereichs durch den Lamellenbereich, registriert,

und dass das Überwachungssystem dazu ausgebildet ist, den Laserbearbeitungskopf automatisch abzuschalten, wenn es ein Betreten des Gefahrenbereichs registriert. Dadurch wird die Betriebssicherheit der Anordnung erhöht, insbesondere wenn durch den Lamellenbereich, etwa aufgrund eines flexiblen Lamellenmaterials, der Gefahrenbereich leicht betreten werden kann.

Bei einer bevorzugten Weiterbildung dieser Ausführungsform ist das Überwachungssystem als optisches Überwachungssystem, insbesondere mit einem Lichtgitter, ausgebildet. Dies hat sich in der Praxis bewährt. Das Lichtgitter wird erfindungsgemäß so engmaschig eingerichtet, dass ein menschlicher Kopf nicht unbemerkt in den Gefahrenbereich gelangen kann, wodurch eine Augenschädigung durch Laserlicht zuverlässig ausgeschlossen wird.

Weitere Vorteile der Erfindung ergeben sich aus der Beschreibung und der Zeichnung. Ebenso können die vorstehend genannten und die noch weiter ausgeführten Merkmale erfindungsgemäß jeweils einzeln für sich oder zu mehreren in beliebigen Kombinationen Verwendung finden. Die gezeigten und beschriebenen Ausführungsformen sind nicht als abschließende Aufzählung zu verstehen, sondern haben vielmehr beispielhaften Charakter für die Schilderung der Erfindung.

Detaillierte Beschreibung der Erfindung und Zeichnung

Die Erfindung ist in der Zeichnung dargestellt und wird anhand von Ausführungsbeispielen näher erläutert. Es zeigen:

Fig. 1    eine schematische Aufsicht auf eine Ausführungsform einer erfindungsgemäßen Laserbearbeitungsmaschinen-Anordnung;

Fig. 2    eine schematische Schrägansicht auf die Laserschutzwand der Anordnung von Fig. 1, mit Blick näherungsweise vom Bedienerstand in Richtung auf die Automatisierungseinrichtung;

Fig. 3    eine schematische Schrägansicht auf die Laserschutzwand der Anordnung von Fig. 1, mit Blick näherungsweise vom Lamellenbereich in Richtung auf die Bearbeitungszone;

Fig. 4    eine schematische Aufsicht auf einen Ausschnitt eines Lamellenbereichs für die Erfindung;

Fig. 5    eine schematische Aufsicht auf den gesamten Lamellenbereich der Anordnung von Fig. 1;

Fig. 6 eine schematische Aufsicht auf einen Teilbereich einer weiteren Ausführungsform einer erfindungsgemäßen Laserbearbeitungsmaschinen-Anordnung, mit örtlich variabler Bearbeitungszone und verdrehbaren Lamellenelementen, mit einer Bearbeitungszone in mittlerer Entfernung zum Lamellenbereich;

Fig. 7 die Anordnung von Fig. 6, mit der Bearbeitungszone nahe am Lamellenbereich;

Fig. 8 die Anordnung von Fig. 6, mit der Bearbeitungszone fern vom Lamellenbereich;

Fig. 9 eine schematische Aufsicht auf einen Ausschnitt eines Lamellenbereichs mit gekrümmten Lamellenelementen, für die Erfindung.

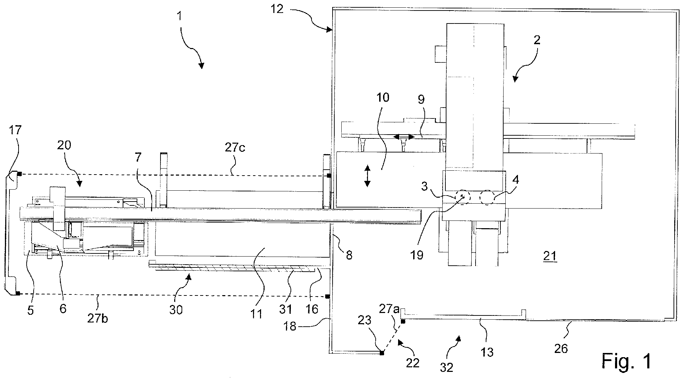

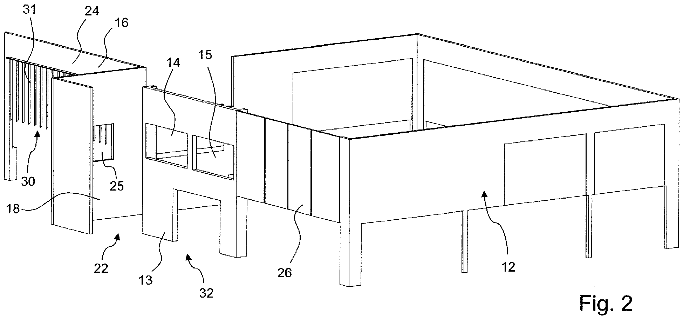

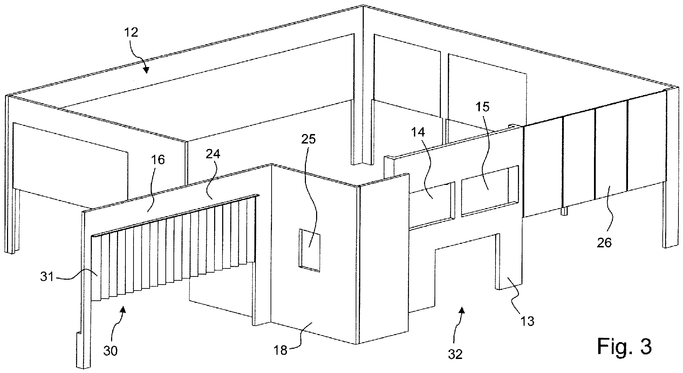

Die **Figur 1** zeigt in schematischer Aufsicht eine Ausführungsform einer erfindungsgemäßen Laserbearbeitungsmaschinen-Anordnung 1, insbesondere umfassend eine Laserbearbeitungsmaschine 2, eine Laserschutzwand 12 und eine Automatisierungseinrichtung 20. Die wesentlichen Teile der Laserschutzwand 12 allein sind zusätzlich in **Figur 2** und **Figur 3** in schematischen perspektivischen Ansichten erläutert.

Die Laserbearbeitungsmaschine 2 verfügt über einen Laserbearbeitungskopf 3 und hier auch über einen Stanzkopf 4 (jeweils gestrichelt angedeutet) zur Bearbeitung von hier blechartigen Werkstücken (nicht näher dargestellt). Der Laserbearbeitungskopf 3 umfasst hier einen Festkörperlaser, beispielsweise mit einer Emissionswellenlänge von ca. 1030 nm, zum Schneiden und/oder Schweißen von Werkstücken. Die Werkstücke werden von einer Ablage 5 für unbearbeitete Werkstücke ("Rohmaterial") mittels eines Sauggreifer-Wagens 6 angehoben und entlang einer Führungsbahn 7 des Sauggreifer-Wagens 6 ("Portal") durch eine Passage 8 zur Laserbearbeitungsmaschine 2 verfahren und an einer Werkstückauflage 10 abgelegt. Mittels der Verfahrbarkeiten der Werkstückauflage 10 und eines Querträgers 9 können abgelegte Werkstücke zum Laserbearbeitungskopf 3 und zum Stanzkopf 4 verbracht, ausgerichtet und während der Bearbeitung nachgeführt werden. Nach der Bearbeitung werden die Werkstücke im Bereich der Laserbearbeitungsmaschine 2 wieder mit dem Sauggreifer-Wagen 6 angehoben und durch die Passage 8 zu einer Ablage 11 für bearbeitete Werkstücke ("Gutteile") verbracht. Die Ablagen 5, 11, der Sauggreifer-Wagen 6 und die Führungsbahn 7 stellen die wesentlichen Komponenten der Automatisierungseinrichtung 20 dar.

Um Personen in der Umgebung der Laserbearbeitungsmaschine 2 vor gestreuter Laserstrahlung zu schützen, die von einer Bearbeitungszone 19 beim Laserbearbeitungskopf 3 radial ausgeht, ist die Laserschutzwand 12 vorgesehen, die für die verwendete Laserstrahlung intransparent ist. Die Laserschutzwand 12 verfügt über eine Vielzahl von Teilabschnitten, hier insbesondere vor einem Bedienerstand 32 (dessen Kontrolleinrichtungen sind nicht näher dargestellt) über ein Zentralelement 13 mit Laserschutzfenstern 14, 15 aus für die Wellenlänge des Lasers (hier Festkörperlasers) des Laserbearbeitungskopfs 3 undurchlässigem Glas, weiterhin über einen ablagenahen Teilabschnitt 16, eine Prallwand 17 und einen zugangsnahen Teilabschnitt 18. Beim ablagenahen Teilabschnitt 16 ist erfindungsgemäß ein Teil der Laserschutzwand 12 als ein Lamellenbereich 30 mit einer Vielzahl von Lamellenelementen 31 ausgebildet (dazu unten mehr). Die Laserschutzwand 12 umgibt einen Gefahrenbereich 21, in welchem von der Bearbeitungszone 19 sich radial ausbreitende Laserstrahlung auftreten kann, und schirmt diese Laserstrahlung nach außen ab. Man beachte, dass Raumwinkelbereiche deutlich unterhalb oder oberhalb der horizontalen Ebene, in der die Bearbeitungszone 19 liegt (entsprechend typischerweise jenseits ca. +/- 15° gegen die horizontale Ebene), aufgrund der Anordnung von Werkstück und Laserbearbeitungskopf 3 mit hier vertikaler Laserachse bei der Bearbeitung meist ohnehin abgeschattet sind, so dass in diesen Raumwinkelbereichen die Laserschutzwand 12 offen ausgebildet sein kann (bzw. nicht benötigt wird), hier beispielsweise unterhalb eines Falttors 26 oder unterhalb des Lamellenbereichs 30.

Die Laserschutzwand 12 weist einige besondere Öffnungen zum Betreten des Gefahrenbereichs 21 auf, insbesondere eine Zugangsöffnung 22 nahe dem Bedienerstand 32. Die Laserschutzwand 12 und diese Öffnungen sind so angeordnet, dass ein sich an die Öffnungen anschließender Teilabschnitt der Laserschutzwand 12 die Öffnungen jeweils abschattet. Die Öffnungen benötigen aufgrund ihrer abgeschatteten Anordnung auch bei Betrieb des Laserbearbeitungskopfs 3 keine laserdichte Abdeckung, und sind entsprechend auch barrierefrei ohne eine Tür ausgebildet. Um Personen, die durch die Öffnungen in den Gefahrenbereich 21 eintreten, vor der Laserstrahlung zu schützen, ist ein hier optisches Überwachungssystem 23 vorgesehen, von dem beispielhaft einige Überwachungseinrichtungen als schwarze Vierecke eingezeichnet sind. Mit dem Überwachungssystem 23 kann aufgedeckt werden, wenn eine Person den Gefahrenbereich 21 betritt. Insbesondere kann dazu eine Unterbrechung eines Kontrollstrahls, der an den Öffnungen ein Lichtgitter bildet, überwacht werden. Bei Durchtreten einer Öffnung wird das Lichtgitter unterbrochen und eine Abschaltung des Lasers im Laserbearbeitungskopf 3 bewirkt. Bevorzugt werden dann auch alle Maschinenbewegungen in der Anordnung 1, etwa des Sauggreifer-Wagens 6, gestoppt. In Fig. 1 sind beispielhaft drei Lichtgitter 27a, 27b und 27c eingezeichnet, die die Zugangsöffnung 22, den vorderen Teil der Automatisierungseinrichtung 20 (und damit auch den Lamellenbereich 30), und weiterhin den hinteren Teil der Automatisierungseinrichtung 20 absichern. Die Öffnungen in der Laserschutzwand 12 und das Überwachungssystem 23 können insbesondere wie in der nachveröffentlichten europäischen Patentanmeldung 13 198 967.5 beschrieben ausgestaltet sein. Man beachte, dass zusätzlich herkömmliche Zugänge, etwa am Falttor 26, in der Laserschutzwand 12 vorgesehen sind.

Im Lamellenbereich 30 wird die Laserschutzwand 12 durch die Lamellenelemente 31 ausgebildet, die für die eingesetzte Laserstrahlung undurchlässig sind. In der gezeigten Ausführungsform hängen die Lamellenelemente von einem Halteelement 24 herab; die Lamellenelemente 31 sind dabei typischerweise jeweils mit dem oberen Ende an einem Montagewinkel (nicht näher dargestellt) lichtdicht fixiert, während das untere Ende frei ist. Die Lamellenelemente 31 sind hier im Wesentlichen plattenförmig (streifenförmig) ausgebildet und sind so gedreht, dass sie mit ihrer Oberflächennormalen näherungsweise auf die Bearbeitungszone 19 gerichtet sind.

Die Lamellenelemente 31 sind dabei überlappend angeordnet, so dass diese insgesamt eine vollständige Abdeckung des Lamellenbereichs 30 für die von der Bearbeitungszone 19 ausgehende Laserstrahlung ausbilden. Die gegenseitige Überlappung der Lamellenelemente 31 und die vollständige Abdeckung des Lamellenbereichs 30 über seine ganze Breite kann insbesondere in Fig. 3 gut ersehen werden.

Weiterhin sind die Lamellenelemente 31 zueinander beabstandet angeordnet, so dass parallel zur Plattenoberfläche der Lamellenelemente 31 zwischen den Lamellenelementen 31 hindurch geblickt werden kann, was insbesondere in Fig. 2 gut ersichtlich ist. Dadurch können große Teile der Automatisierungseinrichtung 20 von außen eingesehen werden, wenn der Betrachter sich etwa vor dem Lamellenbereich 30 aufhält und seinen Blick nach halb links gerichtet hat. Vom Bedienerstand 32 aus kann durch die abgeschattete Zugangsöffnung 22, ein weiteres Laserschutzfenster 25 im zugangsnahen Teilabschnitt 18 der Laserschutzwand 12 und durch den Lamellenbereich 30 die Automatisierungseinrichtung 20 gut eingesehen werden. Dadurch ist es möglich, vor Inbetriebnahme des Laserbearbeitungskopfes 3 oder auch des Sauggreifer-Wagens 6 visuell zu überprüfen, ob sich Personen im Gefahrenbereich 21 und/oder nahe des Sauggreifer-Wagens 6 aufhalten.

Die Lamellenelemente 31 sind hier aus Gummi ausgebildet, so dass die Ablage 11 durch den Lamellenbereich 30 hindurch mit einem Gabelstapler (oder auch allgemein für Personen, Werkstücke und Arbeitsgeräte) zugänglich ist, wobei die Lamellenelemente 31 leicht weggedrückt werden können, insbesondere um die bearbeiteten Werkstücke auszuschleusen. Unterhalb des Lamellenbereichs 30 ist die Laserschutzwand 12 hier ohnehin offen ausgebildet. Weggedrückte Lamellenelemente 31 fallen nach dem Wegfahren des Gabelstaplers schwerkraftbedingt selbsttätig in ihre abdeckende Sollposition zurück.

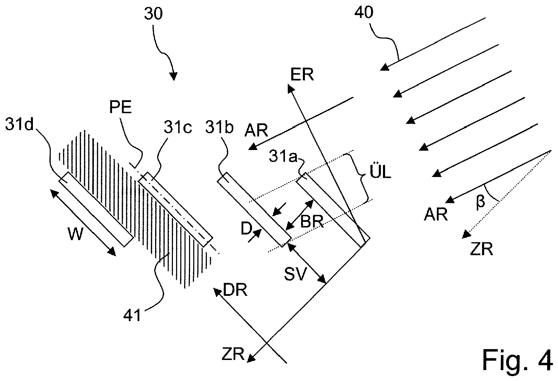

Die **Figur 4** erläutert in einer schematischen Aufsicht eine erfindungsgemäße Laserbearbeitungsmaschinen-Anordnung in einem Ausschnitt eines Lamellenbereichs 30 (ähnlich wie in Fig. 1 bis 3 gezeigt) mit Lamellenelementen 31a-31d näher.

Von einer (nicht dargestellten) Bearbeitungszone geht Laserstrahlung 40 aus, die entlang einer Ausbreitungsrichtung AR propagiert. Wegen der relativ großen Entfernung zur Bearbeitungszone (Strahlungsquelle) und dem relativen kurzen betrachteten Ausschnitt des Lamellenbereichs können lokale Veränderungen der Ausbreitungsrichtung AR von Lamellenelement zu Lamellenelement hier vernachlässigt werden.

Die Lamellenelemente 31a-31d sind entlang einer ersten Richtung ER (auch genannt Querrichtung), die senkrecht zur Ausbreitungsrichtung AR liegt, überlappend angeordnet. Beispielhaft ist die Überlappungslänge ÜL zwischen dem ersten Lamellenelement 31a und dem zweiten Lamellenelement 31b entlang der ersten Richtung ER eingezeichnet. Aufgrund der Überlappung jeweils benachbarter Lamellenelemente 31a-31d entlang der ersten Richtung ER ist sichergestellt, dass die Laserstrahlung 40 nicht durch den Lamellenbereich 30 hindurchtreten kann, in Fig. 4 also nicht in den Zone links unten jenseits der Lamellenelemente 31a-31d gelangen kann.

Die Lamellenelemente 31a-31d überlappen aber nicht nur bezüglich der ersten Richtung ER, sondern sind weiterhin bezüglich einer zweiten Richtung ZR (auch genannt Versatzrichtung) zueinander versetzt angeordnet. Bezüglich der zweiten Richtung ZR sind die Lamellenelemente 31a-31d also hintereinander und voneinander beabstandet angeordnet. Dadurch verbleibt in einer dritten Richtung DR (auch genannt Blickrichtung) jeweils zwischen benachbarten Lamellenelementen, etwa den Lamellenelementen 31c und 31d, ein Sichtspalt 41 (hier schraffiert eingezeichnet); die dritte Richtung DR liegt dabei senkrecht zur zweiten Richtung ZR. Die Breite BR des Sichtspalts 41 in der zweiten Richtung ZR (also der Abstand zwischen zwei benachbarten Lamellenelementen 31a-31d in der zweiten Richtung ZR) ist hier ca. 3-mal so groß wie die Dicke D der Lamellenelemente 31a-31d in der zweiten Richtung ZR. Zur Einrichtung der Überlappung ist weiterhin zwischen benachbarten Lamellenelementen 31a-31d jeweils eine seitliche Verschiebung SV in der dritten Richtung DR vorgesehen, die hier ca. 3/5 der Weite W der Lamellenelemente 31a-31d in der dritten Richtung DR entspricht. Bevorzugt ist die Weite W maximal viermal so groß wie die Breite BR, um auch bei einer gewissen Abweichung der Sichtlinie des Betrachters von der dritten Richtung DR noch eine gewisse Sicht durch den Lamellenbereich 30 zu gestatten.

In der Fig. 4 sind die Lamellenelemente 31a-31d im Wesentlichen plattenförmig ausgebildet, vgl. beispielshalft die (mittlere) Plattenebene PE bei Lamellenelement 31c. Die Plattenebene PE liegt senkrecht zur zweiten Richtung ZR. Die zweite Richtung ZR (bzw. die Normale der Plattenebene PE) verläuft ungefähr entlang der Ausbreitungsrichtung AR; der Winkel $\beta$ zwischen Ausbreitungsrichtung AR und zweiter Richtung ZR beträgt hier ca. 20°.

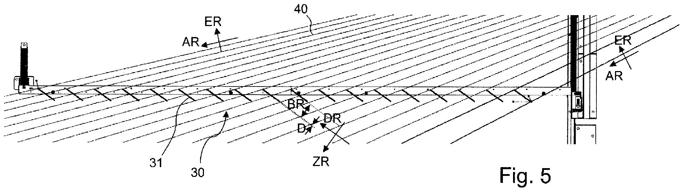

**Figur 5** zeigt in schematischer Aufsicht den gesamten Lamellenbereich 30 der Anordnung 1 von Fig. 1.

Aufgrund der relativ großen lateralen Ausdehnung des Lamellenbereichs 30 ist die Ausbreitungsrichtung AR der Laserstrahlung 40 relativ zu den parallel zueinander angeordneten, also gegenüber der übrigen Anordnung immer gleich orientierten Lamellenelementen 31 veränderlich. So trifft die Laserstrahlung an der rechten Seite in Fig. 5 unter einem steileren Winkel auf die Lamellenelemente 31 als auf der linken Seite. Andererseits ist an der linken Seite die gegenseitige Überlappung der Lamellenelemente 31 bezogen auf die (lokale) erste Richtung ER senkrecht zur lokalen Ausbreitungsrichtung AR auf der linken Seite größer als auf der rechten Seite. Bei parallel zueinander angeordneten Lamellenelementen 31 muss daher darauf geachtet werden, dass überall im Lamellenbereich 30 eine Überlappung der benachbarter Lamellenelemente 31 entlang der (lokalen) ersten Richtung ER gegeben ist.

In Fig. 5 ist die Breite BR der Lichtspalte in der zweiten Richtung ZR ungefähr zehnmal so groß wie die Dicke D der Lamellenelemente 31 in der zweiten Richtung ZR.

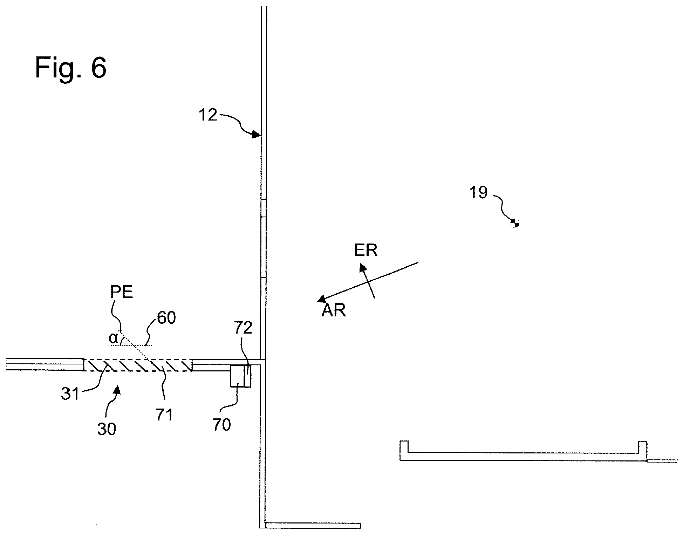

Wenn die Bearbeitungszone 19 nicht ortsfest ist, sondern bezüglich des Lamellenbereichs 30 seine Position verändern kann (etwa weil der Laserbearbeitungskopf verfahrbar ist), ist es gegebenenfalls notwendig, die Lamellenelemente 31 bezüglich einer geänderten Position der Bearbeitungszone 19 neu auszurichten, wie in den Figuren 6 bis 8 in schematischen Aufsichten auf Teile einer erfindungsgemäßen Laserbearbeitungsmaschinen-Anordnung 1 erläutert.

In **Figur 6** befindet sich die Bearbeitungszone 19, von der die Laserstrahlung ausgeht, in einer mittleren Entfernung zum Lamellenbereich 30. Die plattenförmigen Lamellenelemente 31 sind hier mit einem Drehwinkel $\alpha$ von ca. 45° zwischen der jeweiligen Plattenebene PE und der Erstreckungsrichtung 60 des Lamellenbereichs 30 ausgerichtet, in der die Lamellenelemente 31 in gerade verlaufender Reihe angeordnet sind. Die Überlappung der Lammelenelemente 31 in Hinblick auf die erste Richtung ER senkrecht zur Ausbreitungsrichtung AR ist damit sichergestellt.

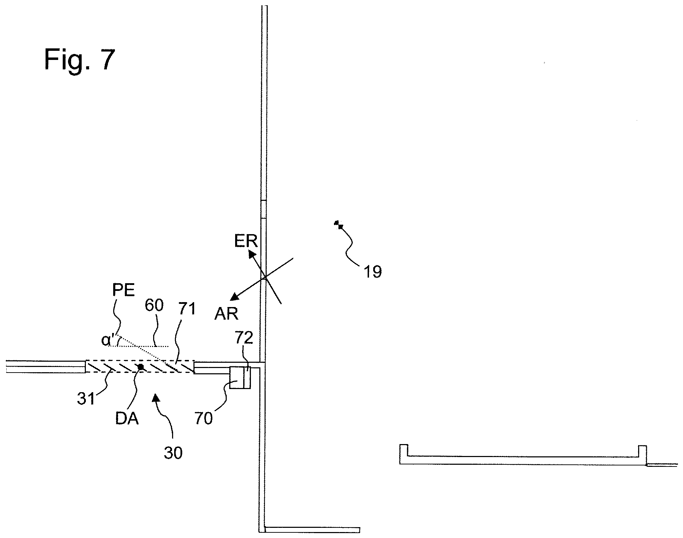

Die **Figur 7** zeigt die Bearbeitungszone 19 in einer Position nahe am Lamellenbereich 30, wodurch die Ausbreitungsrichtung AR nunmehr steiler zum Lamellenbereich 30 verläuft. Um eine ausreichende Überlappung entlang der ersten Richtung ER senkrecht zur Ausbreitungsrichtung AR sicherzustellen, wurden die Lamellenelemente 31 um ihre jeweilige Drehachse DA, die hier vertikal verläuft (senkrecht zur Zeichenebene in Fig. 7) auf einen Drehwinkel $\alpha'$ von ca. 30° gegen die Erstreckungsrichtung 60 des Lamellenbereichs 30 gedreht. Die Lamellenelemente 31 sind hierfür jeweils an einem Trägerelement 71 gelagert (das in Fig. 6 bis 8 zur besseren Erkennbarkeit der Lamellenelemente 31 in einem Abschnitt weggelassen bzw. nur gestrichelt gezeigt ist), und eine gemeinsame motorische Drehhalterung 70 betätigt die Lamellenelemente 31, etwa über ein Gestänge (nicht näher dargestellt). Der einzustellende Drehwinkel $\alpha'$ wird über eine Steuereinrichtung 72 aus der Position der Bearbeitungszone 19 bestimmt und dann der motorischen Drehhalterung 70 vorgegeben.

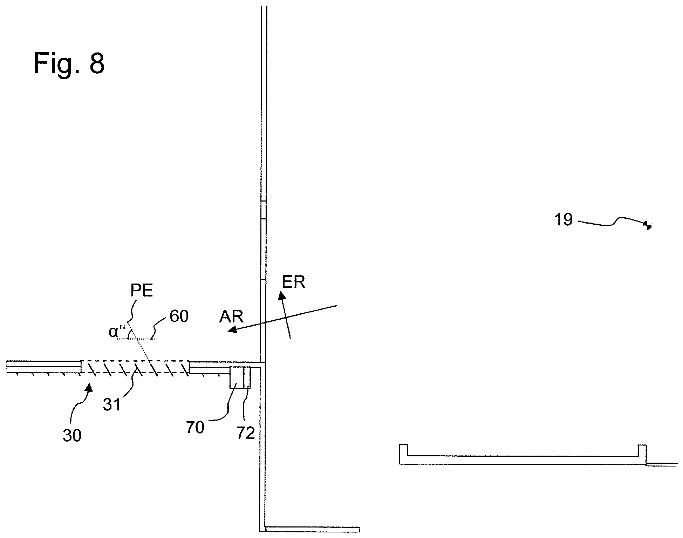

Wenn die Bearbeitungszone 19 in einer besonders weit entfernten Position bezüglich des Lamellenbereichs 30 ist, wie in **Figur 8** dargestellt, wird ein größerer Drehwinkel $\alpha''$, hier von ca. 60°, mit der motorischen Drehhalterung 70 eingestellt.

Man beachte, dass über den Drehwinkel $\alpha$, $\alpha'$, $\alpha''$ auch kontrolliert wird, aus welcher Blickrichtung das innere der Laserbearbeitungsmaschinen-Anordnung einsehbar ist. Daher kann die motorische Drehhalterung 70 auch zur Veränderung der einsehbaren Blickrichtung eingesetzt werden, unter Beachtung des Erfordernisses der vollständigen Überdeckung des Lamellenbereichs 30 durch überlappende Lamellenelemente 31 in Hinblick auf die Laserstrahlung.

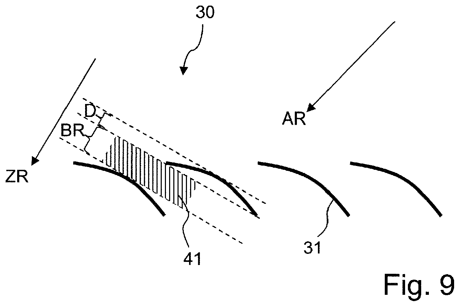

**Figur 9** zeigt schließlich eine Variante von Lamellenelementen 31 in einem Ausschnitt eines Lamellenbereichs 30 für die Erfindung in Aufsicht, ähnlich wie in Fig. 4 dargestellt. Die vertikal ausgerichteten Lamellenelemente 31 verfügen hier über eine bezüglich der Ausbreitungsrichtung AR der Laserstrahlung konvexe Krümmung. Gekrümmte Lamellenformen können im Einzelfall nützlich sein, um bei Luftströmungen am Lamellenbereich 30 Kräfte auf die Lamellenelemente 31 auszuüben oder einzustellen, insbesondere um diese in überlappender Position zu halten, oder um mechanische Eigenschaften der Lamellenelemente 31 zu gestalten.

Die Krümmung der Lamellenelemente 31 erhöht allerdings in der Regel die effektive Dicke D der Lamellenelemente 31 im Verhältnis zur Breite BR der Sichtspalte 41, jeweils in der zweiten Richtung ZR. Die zweite Richtung ZR ist im Allgemeinen so gewählt, dass die Sichtspalte 41 eine maximale Breite BR aufweisen.

Zusammenfassend beschreibt die vorliegende Erfindung eine Laserbearbeitungsmaschine mit einer Schutzeinrichtung, die das beim Bearbeitungsprozess entstehende Streulicht des Lasers am Austritt hindert, aber andererseits Personen außerhalb der Schutzeinrichtung einen Einblick ermöglicht, so dass zumindest einzelne Bereiche innerhalb der Schutzeinrichtung ohne aufwändige Zusatzmaßnahmen eingesehen werden können. Dies wird erreicht durch eine geometrische Anordnung von abschattenden Lamellen bzw. Streifen, die sich - betrachtet quer zur Ausbreitungsrichtung - überlappen, senkrecht dazu dagegen versetzt angeordnet sind und so Sichtspalte frei lassen. Die geometrische Anordnung der Lamellen bzw. Streifen (insbesondere deren Größe, Drehwinkel und Zwischen-Lamellen-Abstand) ist grundsätzlich auf den Quellort der Laserlichts bzw. die Ausbreitungsrichtung des Laserlichts abzustimmen, was ohne Weiteres während der Konstruktionsphase der Schutzeinrichtung bzw. der Laserbearbeitungsmaschine erfolgen kann.

Bezugszeichenliste

| 1 | Laserbearbeitungsmaschinen-Anordnung |
|---|---|
| 2 | Laserbearbeitungsmaschine |
| 3 | Laserbearbeitungskopf |
| 4 | Stanzkopf |
| 5 | Ablage für unbearbeitete Werkstücke |
| 6 | Sauggreifer-Wagen |
| 7 | Führungsbahn |
| 8 | Passage |
| 9 | Querträger |
| 10 | Werkstückauflage |
| 11 | Ablage für bearbeitete Werkstücke |
| 12 | Laserschutzwand |
| 13 | Zentralelement |
| 14 | Laserschutzfenster |
| 15 | Laserschutzfenster |
| 16 | ablagenaher Teilabschnitt |
| 17 | Prallwand |
| 18 | zugangsnaher Teilabschnitt |
| 19 | Bearbeitungszone |
| 20 | Automatisierungseinrichtung |
| 21 | Gefahrenbereich |
| 22 | Zugangsöffnung |
| 23 | Überwachungssystem |
| 24 | Halteelement |
| 25 | weiteres Laserschutzfenster |
| 26 | Falttor |
| 27a | Lichtgitter an Zugangsöffnung |
| 27b | Lichtgitter an vorderem Teil der Automatisierungseinrichtung |
| 27c | Lichtgitter an hinterem Teil der Automatisierungseinrichtung |
| 30 | Lamellenbereich |
| 31 | Lamellenelement |
| 31a | Lamellenelement |
| 31b | Lamellenelement |
| 31c | Lamellenelement |
| 31d | Lamellenelement |
| 32 | Bedienerstand |
| 40 | Laserstrahlung |
| 41 | Sichtspalt |
| 60 | Erstreckungsrichtung des Lamellenbereichs |
| 70 | motorische Drehhalterung |
| 71 | Trägerelement |
| 72 | Steuereinrichtung |
| AR | Ausbreitungsrichtung |
| BR | Breite des Sichtspalts |
| D | Dicke des Lamellenelements |
| DA | Drehachse |
| DR | dritte Richtung |
| ER | erste Richtung |
| PE | Plattenebene |
| ÜL | Überlapplänge |
| W | Weite |
| ZR | zweite Richtung |
| α | Drehwinkel |
| α' | Drehwinkel |
| α" | Drehwinkel |

**Patentansprüche**

1. Laserbearbeitungsmaschinen-Anordnung (1), umfassend

   - einen Laserbearbeitungskopf (3) zur Laserbearbeitung eines Werkstücks, wobei im Betrieb des Laserbearbeitungskopfs (3) von einer Bearbeitungszone (19) am Werkstück radial Laserstrahlung (40) ausgeht, und
   - eine Laserschutzwand (12), welche den Laserbearbeitungskopf (3) und einen Gefahrenbereich (21) um den Laserbearbeitungskopf (3) umgibt, und welche die im Betrieb radial von der Bearbeitungszone (19) ausgehende Laserstrahlung (40) abschirmt,
   wobei zumindest ein Teil der Laserschutzwand (12) als ein Lamellenbereich (30) mit mehreren, für die Laserstrahlung undurchlässigen Lamellenelementen (31; 31a-31d) ausgebildet ist, wobei die Lamellenelemente (31; 31a-31d) entlang einer ersten Richtung (ER), die senkrecht zur lokalen Ausbreitungsrichtung (AR) der Laserstrahlung (40) verläuft, überlappen,
   und wobei die Lamellenelemente (31; 31a-31d) entlang einer zweiten Richtung (ZR) zueinander versetzt angeordnet sind, so dass entlang einer dritten Richtung (DR), die senkrecht zur zweiten Richtung (ZR) verläuft, zwischen den Lamellenelementen (31; 31a-31d) freie Sichtspalte (41) verbleiben,

   **dadurch gekennzeichnet,**
   **dass** die Anordnung (1) über eine Automatisierungseinrichtung (20) verfügt, an der unbearbeitete Werkstücke in die Anordnung (1) eingeschleust werden können, und/oder bearbeitete Werkstücke aus der Anordnung (1) ausgeschleust werden können,
   **dass** die Anordnung (1) weiterhin über einen Bedienerstand (32) verfügt, von dem aus ein Bediener die Anordnung (1) steuern kann,
   und **dass** der Lamellenbereich (30) so angeordnet ist, dass ein Bediener am Bedienerstand (32) entlang der dritten Richtung (DR) durch den Lamellenbereich (30) die Automatisierungseinrichtung (20) einsehen kann.

2. Anordnung (1) nach Anspruch 1, **dadurch gekennzeichnet, dass** die zweite Richtung (ZR) um maximal 45°, bevorzugt um maximal 30°, von der lokalen Ausbreitungsrichtung (AR) der Laserstrahlung (40) abweicht.

3. Anordnung (1) nach einem der vorhergehenden Ansprüche, **dadurch gekennzeichnet, dass** die Lamellenelemente (31; 31a-31d) jeweils in der Form einer ebenen Platte ausgebildet sind, wobei eine Plattenebene (PE) der ebenen Platte senkrecht zur zweiten Richtung (ZR) verläuft.

4. Anordnung (1) nach einem der vorhergehenden Ansprüche, **dadurch gekennzeichnet, dass** die Lamellenelemente (31; 31a-31d) aus einem flexiblen Material, insbesondere aus Gummi, gefertigt sind.

5. Anordnung (1) nach einem der vorhergehenden Ansprüche, **dadurch gekennzeichnet, dass** die Lamellenelemente (31; 31a-31d) in einer gerade verlaufenden Reihe angeordnet sind.

6. Anordnung (1) nach einem der vorhergehenden Ansprüche, **dadurch gekennzeichnet, dass** die Lamellenelemente (31; 31a-31d) parallel zur Vertikalen ausgerichtet sind.

7. Anordnung (1) nach einem der vorhergehenden Ansprüche, **dadurch gekennzeichnet, dass** die Lamellenelemente (31; 31a-31d) mit einem oberen Ende an einem Halteelement (24) befestigt sind und vom Halteelement (24) herabhängen.

8. Anordnung (1) nach einem der vorhergehenden Ansprüche, **dadurch gekennzeichnet, dass** die Lamellenelemente (31; 31a-31d) über oder angelengt an eine motorische Drehhalterung (70) an einem Trägerelement (71) befestigt sind, wobei mit der motorischen Drehhalterung (70) die Lamellenelemente (31; 31a-31d) jeweils um eine Drehachse (DA) gedreht werden können, insbesondere wobei die Drehachse (DA) näherungsweise senkrecht zur lokalen Ausbreitungsrichtung (AR) verläuft, und dass eine Steuereinrichtung (72) vorgesehen ist, mit der ein Drehwinkel ($\alpha$, $\alpha$', $\alpha$") der Lamellenelemente (31; 31a-31d) in Abhängigkeit von der Position und/oder der Abstrahlcharakteristik der Bearbeitungszone (19) automatisch einstellbar ist.

9. Anordnung (1) nach einem der vorhergehenden Ansprüche, **dadurch gekennzeichnet, dass** für die Dicke D der Lamellenelemente (31; 31a-31d) entlang der zweiten Richtung (ZR) und die Breite BR der Sichtspalte (41) zwischen benachbarten Lamellenelementen (31; 31a-31d) entlang der zweiten Richtung (ZR) gilt:

$$D \leq 1/2 * BR, \text{ bevorzugt } D \leq 1/8 * BR.$$

**10.** Anordnung (1) nach einem der vorhergehenden Ansprüche, **dadurch gekennzeichnet, dass** der Lamellenbereich (30) wenigstens fünf gleichartige Lamellenelemente (31; 31a-31d) aufweist.

**11.** Anordnung (1) nach einem der vorhergehenden Ansprüche, **dadurch gekennzeichnet, dass** die Automatisierungseinrichtung (20) so ausgebildet ist, dass unbearbeitete Werkstücke von dort zum Laserbearbeitungskopf (3) verbracht werden können und/oder bearbeitete Werkstücke vom Laserbearbeitungskopf (3) nach dort verbracht werden können, und dass der Bedienerstand (32) so ausgebildet ist, dass von diesem aus ein Bediener die Automatisierungseinrichtung (20) steuern kann.

**12.** Anordnung (1) nach einem der vorhergehenden Ansprüche, **dadurch gekennzeichnet, dass** entlang der dritten Richtung (DR) vor oder hinter dem Lamellenbereich (30)

- wenigstens ein weiterer Lamellenbereich (30), dessen dritte Richtung (DR) parallel zur dritten Richtung (DR) des Lamellenbereichs (30) verläuft,
- und/oder wenigstens ein Laserschutzfenster (14, 15; 25), mit einer Verglasung, die für die Laserstrahlung (40) intransparent ist,
- und/oder wenigstens eine Zugangsöffnung (22), die mittels der Laserschutzwand (12) oder unter Mitwirkung der Laserschutzwand (12) von der im Betrieb des Laserbearbeitungskopfs (3) von der Bearbeitungszone (19) radial ausgehenden Laserstrahlung (40) vollständig abgeschattet ist, angeordnet ist.

**13.** Anordnung (1) nach einem der vorhergehenden Ansprüche, **dadurch gekennzeichnet, dass** die Anordnung ein Überwachungssystem (23) umfasst, welches ein Betreten des Gefahrenbereichs (21), insbesondere ein Betreten des Gefahrenbereichs (21) durch den Lamellenbereich (30), registriert, und dass das Überwachungssystem (23) dazu ausgebildet ist, den Laserbearbeitungskopf (3) automatisch abzuschalten, wenn es ein Betreten des Gefahrenbereichs (21) registriert.

**14.** Anordnung (1) nach Anspruch 13, **dadurch gekennzeichnet, dass** das Überwachungssystem (23) als optisches Überwachungssystem (23), insbesondere mit einem Lichtgitter (27a-27c), ausgebildet ist.

**Claims**

**1.** Laser processing machine arrangement (1) comprising

- a laser processing head (3) for the laser processing of a workpiece, wherein during operation of the laser processing head (3) laser radiation (40) is emitted radially from a processing zone (19) on the workpiece, and
- a laser protection wall (12), which surrounds the laser processing head (3) and a danger zone (21) around the laser processing head (3) and which shields the laser radiation (40) which is emitted radially during operation from the processing zone (19),

wherein at least a portion of the laser protection wall (12) is constructed as a slat region (30) with a plurality of slat elements (31; 31a-31d) which are impermeable to the laser radiation, wherein the slat elements (31; 31a-31d) overlap along a first direction (ER) which extends perpendicularly to the local propagation direction (AR) of the laser radiation (40), and wherein the slat elements (31; 31a-31d) are arranged offset with respect to each other in a second direction (ZR) so that free viewing gaps (41) remain between the slat elements (31; 31a-31d) in a third direction (DR) which extends perpendicularly to the second direction (ZR), **characterised in that** the arrangement (1) has an automation device (20) at which unprocessed workpieces can be transferred into the arrangement (1) and/or processed workpieces can be transferred out of the arrangement (1), **in that** the arrangement (1) further has an operator stand (32) from which an operator can control the arrangement (1), and **in that** the slat region (30) is arranged in such a manner that an operator on the operator stand (32) can look in the third direction (DR) through the slat region (30) at the automation device (20).

2.  Arrangement (1) according to claim 1, **characterised in that** the second direction (ZR) deviates by a maximum of 45°, preferably by a maximum of 30°, from the local propagation direction (AR) of the laser radiation (40).

3.  Arrangement (1) according to any one of the preceding claims, **characterised in that** the slat elements (31; 31a-31d) are each constructed in the form of a planar plate, wherein a plate plane (PE) of the planar plate extends perpendicularly to the second direction (ZR).

4.  Arrangement (1) according to any one of the preceding claims, **characterised in that** the slat elements (31; 31a-31d) are produced from a flexible material, in particular from rubber.

5.  Arrangement (1) according to any one of the preceding claims, **characterised in that** the slat elements (31; 31a-31d) are arranged in a linearly extending row.

6.  Arrangement (1) according to any one of the preceding claims, **characterised in that** the slat elements (31; 31a-31d) are orientated parallel with the vertical.

7.  Arrangement (1) according to any one of the preceding claims, **characterised in that** the slat elements (31; 31a-31d) are secured with an upper end to a retention element (24) and are suspended from the retention element (24).

8.  Arrangement (1) according to any one of the preceding claims, **characterised in that** the slat elements (31; 31a-31d) are secured to a carrier element (71) via or hinged to a motorised rotary holder (70), wherein the slate elements (31; 31a-31d) can each be rotated about a rotation axis (DA) with the motorised rotary holder (70), in particular wherein the rotation axis (DA) extends approximately perpendicularly to the local propagation direction (AR), and **in that** there is provided a control device (72) with which a rotation angle ($\alpha$, $\alpha'$, $\alpha''$) of the slat elements (31; 31a-31d) can be automatically adjusted in accordance with the position and/or the radiation characteristic of the processing zone (19).

9.  Arrangement (1) according to any one of the preceding claims, **characterised in that**, for the thickness D of the slat elements (31; 31a-31d) in the second direction (ZR) and the width (BR) of the viewing gaps (41) between adjacent slat elements (31; 31a-31d) in the second direction (ZR), the following applies:

$$D \leq 1/2*BR, \text{ preferably } D \leq 1/8*BR.$$

10. Arrangement (1) according to any one of the preceding claims, **characterised in that** the slat region (30) has at least five identical slat elements (31; 31a-31d).

11. Arrangement (1) according to any one of the preceding claims, **characterised in that** the automation device (20) is constructed in such a manner that unprocessed workpieces can be moved from there to the laser processing head (3) and/or processed workpieces can be moved from the laser processing head (3) to there, and **in that** the operator stand (32) is constructed in such a manner that an operator can control the automation device (20) therefrom.

12. Arrangement (1) according to any one of the preceding claims, **characterised in that** there is/are arranged in the third direction (DR) in front of or behind the slat region (30)

    - at least one additional slat region (30) whose third direction (DR) extends parallel with the third direction (DR) of the slat region (30),
    - and/or at least one laser protection window (14, 15; 25), having glazing which is non-transparent to the laser radiation (40),
    - and/or at least one access opening (22) which is completely shadowed by means of the laser protection wall (12), or with the cooperation of the laser protection wall (12), from the laser radiation (40) which is emitted radially during operation of the laser processing head (3) from the processing zone (19).

13. Arrangement (1) according to any one of the preceding claims, **characterised in that** the arrangement comprises a monitoring system (23) which registers entry into the danger zone (21), in particular entry into the danger zone (21) through the slat region (30), and **in that** the monitoring system (23) is constructed to automatically switch off the laser processing head (3) when entry into the danger zone (21) is registered.

**14.** Arrangement (1) according to claim 13, **characterised in that** the monitoring system (23) is constructed as an optical monitoring system (23), in particular with a light grid (27a-27c).

**Revendications**

**1.** Agencement de machine d'usinage au laser (1), comprenant

- une tête d'usinage au laser (3) pour l'usinage au laser d'une pièce,
dans lequel, pendant le fonctionnement de la tête d'usinage au laser (3), un rayonnement laser (40) émane radialement d'une zone d'usinage (19) sur la pièce, et
- une paroi de protection laser (12) qui entoure la tête d'usinage au laser (3) et une zone dangereuse (21) autour de la tête d'usinage au laser (3), et qui protège contre le rayonnement laser (40) émanant radialement de la zone d'usinage (19) pendant le fonctionnement, au moins une partie de la paroi de protection laser (12) étant réalisée sous la forme d'une zone lamellaire (30) comportant plusieurs éléments lamellaires (31 ; 31a-31d) imperméables au rayonnement laser, les éléments lamellaires (31 ; 31a-31d) se chevauchant le long d'une première direction (ER) qui s'étend perpendiculairement à la direction de propagation locale (AR) du rayonnement laser (40),

et dans lequel les éléments lamellaires (31 ; 31a-31d) sont décalés les uns par rapport aux autres le long d'une deuxième direction (ZR), de sorte qu'il reste des fentes de visualisation libres (41) entre les éléments lamellaires (31 ; 31a-31d) le long d'une troisième direction (DR) qui s'étend perpendiculairement à la deuxième direction (ZR), **caractérisé en ce que** l'agencement (1) dispose d'un dispositif d'automatisation (20) qui permet d'introduire des pièces non usinées dans l'agencement (1) et/ou d'éjecter des pièces usinées de l'agencement (1),
**que** l'agencement (1) dispose en outre d'un poste de conduite (32) à partir duquel un opérateur peut commander l'agencement (1),
et **que** la zone lamellaire (30) est disposée de telle sorte qu'un opérateur au poste de conduite (32) peut voir le dispositif d'automatisation (20) à travers la zone lamellaire (30) le long de la troisième direction (DR).

**2.** Agencement (1) selon la revendication 1, **caractérisé en ce que** la deuxième direction (ZR) s'écarte au maximum de 45°, de préférence au maximum de 30°, de la direction de propagation locale (AR) du rayonnement laser (40).

**3.** Agencement (1) selon l'une des revendications précédentes, **caractérisé en ce que** les éléments lamellaires (31 ; 31a-31d) sont réalisés chacun sous la forme d'une plaque plane, un plan de plaque (PE) de la plaque plane s'étendant perpendiculairement à la deuxième direction (ZR).

**4.** Agencement (1) selon l'une des revendications précédentes, **caractérisé en ce que** les éléments lamellaires (31 ; 31a-31d) sont constitués d'un matériau flexible, en particulier de caoutchouc.

**5.** Agencement (1) selon l'une des revendications précédentes, **caractérisé en ce que** les éléments lamellaires (31 ; 31a-31d) sont disposés en une rangée rectiligne.

**6.** Agencement (1) selon l'une des revendications précédentes, **caractérisé en ce que** les éléments lamellaires (31 ; 31a-31d) sont orientés parallèlement à la verticale.

**7.** Agencement (1) selon l'une des revendications précédentes, **caractérisé en ce que** les éléments lamellaires (31 ; 31a-31d) sont fixés par une extrémité supérieure à un élément de maintien (24) et sont suspendus à l'élément de maintien (24).

**8.** Agencement (1) selon l'une des revendications précédentes, **caractérisé en ce que** les éléments lamellaires (31 ; 31a-31d) sont fixés au moyen d'un support rotatif motorisé (70) ou de manière articulée sur celui-ci à un élément de support (71), les éléments lamellaires (31 ; 31a-31d) pouvant tourner autour d'un axe de rotation (DA) grâce au support rotatif motorisé (70), l'axe de rotation (DA) s'étendant en particulier approximativement perpendiculairement à la direction de propagation locale (AR), et qu'il est prévu un dispositif de commande (72) avec lequel un angle de rotation ($\alpha$, $\alpha$', $\alpha$") des éléments lamellaires (31 ; 31a-31d) peut être réglé automatiquement en fonction de la position et/ou de la caractéristique de rayonnement de la zone d'usinage (19).

9. Agencement (1) selon l'une des revendications précédentes, **caractérisé en ce que** la relation entre l'épaisseur D des éléments lamellaires (31 ; 31a-31d) le long de la deuxième direction (ZR) et la largeur BR de la fente de visualisation (41) entre des éléments lamellaires (31 ; 31a-31d) adjacents le long de la deuxième direction (ZR) est donnée par :

$$D \leq 1/2*BR, \text{ de préférence } D \leq 1/8*BR.$$

10. Agencement (1) selon l'une des revendications précédentes, **caractérisé en ce que** la zone lamellaire (30) présente au moins cinq éléments lamellaires (31 ; 31a-31d) du même type.

11. Agencement (1) selon l'une des revendications précédentes, **caractérisé en ce que** le dispositif d'automatisation (20) est conçu de telle sorte que des pièces non usinées peuvent être transférées de celui-ci vers la tête d'usinage au laser (3) et/ou des pièces usinées être transférées de la tête d'usinage au laser (3) vers celui-ci, et que le poste de conduite (32) est conçu de telle sorte qu'un opérateur peut commander le dispositif d'automatisation (20) à partir de celui-ci.

12. Agencement (1) selon l'une des revendications précédentes, **caractérisé en ce que** le long de la troisième direction (DR), devant ou derrière la zone lamellaire (30), sont disposées

- au moins une autre zone lamellaire (30) dont la troisième direction (DR) s'étend parallèlement à la troisième direction (DR) de la zone lamellaire (30),
- et/ou au moins une fenêtre de protection laser (14, 15 ; 25), avec un vitrage non transparent pour le rayonnement laser (40),
- et/ou au moins une ouverture d'accès (22) qui, au moyen de la paroi de protection laser (12) ou avec la participation de la paroi de protection laser (12), est complètement protégée contre le rayonnement laser (40) émanant radialement de la zone d'usinage (19) pendant le fonctionnement de la tête d'usinage au laser (3).

13. Agencement (1) selon l'une des revendications précédentes, **caractérisé en ce que** le l'agencement comprend un système de surveillance (23) qui enregistre une entrée dans la zone dangereuse (21), en particulier une entrée dans la zone dangereuse (21) à travers la zone lamellaire (30), et que le système de surveillance (23) est conçu pour désactiver automatiquement la tête d'usinage au laser (3) lorsqu'il enregistre une entrée dans la zone dangereuse (21).

14. Agencement (1) selon la revendication 13, **caractérisé en ce que** le système de surveillance (23) est réalisé sous la forme d'un système de surveillance optique (23), en particulier avec une barrière immatérielle (27a-27c).

Fig. 1

Fig. 2

Fig. 3

Fig. 4

Fig. 5

Fig. 6

## Fig. 7

Fig. 8

PE

α"    60

AR    ER

31

30

70    72

19

Fig. 9

**IN DER BESCHREIBUNG AUFGEFÜHRTE DOKUMENTE**

**In der Beschreibung aufgeführte Patentdokumente**

- US 20090045175 A1
- WO 2011045098 A1
- EP 13198967 A

**In der Beschreibung aufgeführte Nicht-Patentliteratur**

- TruMatic 3000 fiber: Kombination hoch drei. *Trumpf Werkzeugmaschinen GmbH + Co. KG,* 17. Dezember 2013